# EUROPÄISCHE PATENTSCHRIFT

(11) **EP 2 990 247 B1**
(45) Veröffentlichungstag und Bekanntmachung des Hinweises auf die Patenterteilung: **13.09.2017**
(21) Anmeldenummer: 15179007.8
(22) Anmeldetag: 30.07.2015
(51) Int. Cl.: B60K 1/04

(54) **TRAGGESTELL FÜR ENERGIEVERSORGUNGSEINHEIT SOWIE ENERGIEVERSORGUNGSEINHEIT FÜR MOBILE ARBEITSMASCHINE**
SUPPORTING FRAME FOR ENERGY SUPPLY UNIT AND ENERGY SUPPLY UNIT FOR MOBILE WORKING MACHINE
CADRE PORTEUR POUR UNITE D'ALIMENTATION EN ENERGIE POUR UNE MACHINE DE TRAVAIL MOBILE

(30) Priorität: 28.08.2014 DE 102014112404
(43) Veröffentlichungstag der Anmeldung: 02.03.2016
(73) Patentinhaber: Linde Material Handling GmbH, 63743 Aschaffenburg (DE)
(72) Erfinder: Groh, Jonas, 63743 Aschaffenburg (DE)
(74) Vertreter: Patentship Patentanwaltsgesellschaft mbH

(56) Entgegenhaltungen:
- EP-A1- 2 887 420
- WO-A1-2014/123040
- WO-A2-02/067346
- DE-A1- 4 321 768
- DE-A1-102012 103 287
- DE-A1-102013 020 292
- US-A- 3 497 090

## Beschreibung

Die Erfindung betrifft eine Wechseleinheit aus einer Energieversorgungseinheit und einem Traggestell nach dem Oberbegriff des Patentanspruchs 1.

Ein Ausführungsbeispiel für eine mobile Arbeitsmaschine, die elektrisch angetrieben wird, ist ein batterieelektrisch betriebenes Flurförderzeug. Unter diesen sind beispielsweise elektrisch angetriebene Gegengewichtsgabelstapler bekannt, die mit einer auswechselbaren Traktionsbatterie zum Einsatz kommen und an ihrer Vorderachse ein Hubgerüst mit Lastaufnahmemitteln aufweisen, insbesondere eine Lastgabel. Dabei wird die Stabilität eines solchen Flurförderzeugs mit einer aufgenommenen Last entscheidend von dem Gesamtschwerpunkt des Fahrzeugs bestimmt, der wiederum von der Position eines Gegengewichtes, aber insbesondere auch von der Position und dem Gewicht der Traktionsbatterie abhängt. Bei herkömmlichen bekannten Traktionsbatterien handelt es sich dabei um eine relativ schwere Bleibatterie, die somit erheblich zu einem Gegenmoment gegenüber einer aufgenommenen Last beiträgt. Um instabile Zustände mit der Gefahr eines Umkippens zu vermeiden, aber auch beim Bremsen sind das Fahrzeuggewicht und der Schwerpunkt jeweils von Bedeutung.

Bei den nach dem Stand der Technik bekannten Bleibatterien erfolgt eine chemische Reaktion zwischen Schwefelsäure und Blei zur Speicherung der elektrischen Energie. Durch neuere Technologien können inzwischen Batterien bzw. Akkumulatoren hergestellt werden und auch im industriellen Einsatz verwendet werden, die bessere Leistungsdaten bieten. Solche Batterien kann man als Hochleistungsbatterien bezeichnen, die sich dadurch auszeichnen dass sie gegenüber einem Blei-Säureakkumulator eine höhere Energiedichte in Bezug auf Gewicht und/oder Volumen aufweisen und eine andere Technik als eine Blei-Säure Reaktion für die Energiespeicherung nutzen. Hinzu kommt bei vielen Hochleistungsbatterien als Merkmal, dass eine hohe Leistung beim Entladen abgegeben werden kann und/oder mit großer Leistung geladen werden kann. Die typischen Energiedichten in Bezug auf Gewicht und/oder Volumen liegen bei einer Hochleistungsbatterie dabei mindestens für einen der beiden Werte oberhalb und außerhalb der entsprechenden Kenngrößen für Blei-Säurebatterien.

Bereits Nickel-Cadmium Batterien weisen zwar keinen erheblichen Gewichtsvorteil auf, haben jedoch eine bis zum dreifachen höhere Energiedichte in Bezug auf das Volumen. Weitere bekannte Technologien für Akkumulatoren bzw. wieder aufladbare Batterien unter Einsatz von Nickel sind beispielsweise Nickel-Metallhydrid, Nickel-Eisen, Nickel-Wasserstoff, Nickel-Zink und Silber-Zink. Daneben sind auch Natrium-Nickelchlorid und Natrium-Schwefel Akkumulatoren bekannt.

Zunehmend in größerem Umfang eingesetzt werden jedoch Lithium-Ionenbatterien, die eine in Serie anwendbare Zuverlässigkeit erreicht haben, sich durch hohe Energiedichte auszeichnen und nur einem geringen Memoryeffekt unterliegen sowie ein Entladen der Batterie bzw. Aufladen der Batterie mit großer Leistung ermöglichen. Bei der Lithium-Ionenbatterie sind ebenfalls unterschiedliche Technologien bekannt, wie beispielsweise Lithium-Polymer, Lithium-Cobaltdioxid, Lithium-Luft, Lithium-Titanat, Lithium-Eisenphosphat, Lithium-Mangan und Zinn-Schwefel-Lithiumionen.

Besonders vorteilhaft ist der Einsatz solcher Hochleistungsbatterien bei Fahrzeugen und beispielsweise Flurförderzeugen, da aufgrund der hohen Energiedichte in Bezug auf das Volumen bei dem vorgegebenen Bauraum für die Batterie eine größere Menge elektrische Energie gespeichert werden kann und somit die Reichweite eines Fahrzeugs bzw. die Einsatzdauer des Flurförderzeugs vergrößert werden kann.

Bei batterie-elektrisch betriebenen Gegengewichtgabelstaplern, bei denen insbesondere Lithium-Ionenbatterie als Hochleistungsbatterien zum Einsatz kommen sollen, ergibt sich jedoch der Nachteil, dass durch das geringere Gewicht der Traktionsbatterie die Schwerpunktlage des gesamten Fahrzeuges und somit die Stabilitätssituation verändert wird. Wenn beispielsweise eine bestehende Bleibatterie durch eine Lithium-Ionenbatterie ersetzt wird, kann ein erheblicher Gewichtsunterschied entstehen, wenn eine Blei-Säurebatterie eine übliche Dichte von 2700 kg/m³ aufweist, eine Lithium-Ionenbatterie jedoch nur von ca. 2100 kg/m³. Der Gegengewichtgabelstapler müsste dann mit einem entsprechend größeren Gegengewicht versehen werden. Dies ist jedoch dann nicht möglich, oder mit Nachteilen verbunden, wenn ein Wechselbetrieb sowohl mit Blei-Säurebatterien wie auch mit Lithium-Ionenbatterien erfolgen soll. Auch beruhen Angaben zur Tragfähigkeit wie auch zur Steigfähigkeit im Fahrbetrieb bei Flurförderzeugen auf den Gewichtswerten einer Bleibatterie, und sind folglich bei Verwendung einer Hochleistungsbatterie mit gleichen geometrischen Maßen nicht mehr korrekt.

Bekannt ist auch weiterhin, eine Energieversorgungseinheit mit Brennstoffzellen anstelle der Traktionsbatterie einzusetzen, die dieselben geometrischen Maße einnimmt und als ein Bauteil eingesetzt werden kann. Dies ist ebenso möglich für eine Energieversorgungseinheit als Hybridbaugruppe, die neben einer Hochleistungsbatterie einen Verbrennungsmotor oder eine Brennstoffzelle zusätzlich enthält.

Aus der DE 10 2011 011 716 A1 ist ein Traggestell eines Energiemoduls für ein Flurförderzeug bekannt, das als ein getrenntes Bauteil mit Aufnahmen für Gabelzinken eines Gabelstaplers versehen ist, so dass eine Energieversorgungseinheit, insbesondere eine Traktionsbatterie, auf dieses Traggestell gestellt werden kann und mit diesem zusammen in ein Batteriefach eingesetzt werden kann.

Die gattungsbildende US 3,497,090, A offenbart eine Wechseleinheit aus einem Batteriegehäuse und einer Traktionsbatterie.

Die DE 43 21 768 A1 offenbart einen Gabelstapler mit einem Hybridantrieb, bei dem ein Verbrennungsmotor in ein Batteriefach eingesetzt ist und zum Ausgleich von Gewichtsdifferenzen eine zusätzliche Grundplatte innerhalb des Batteriefachs vorgesehen ist.

Die WO 02/067346 A2, die WO 2014/123040 A1 und die DE 10 2012 103 287 A1 offenbaren Energieversorgungseinheiten mit zusätzlichen Ballastgewichten.

Der vorliegenden Erfindung liegt daher die Aufgabe zugrunde, eine Wechseleinheit aus einer Traktionsbatterie und einem Traggestell für eine mobile Arbeitsmaschine zur Verfügung zu stellen, die die zuvor genannten Nachteile vermeidet, kostengünstig herzustellen ist und einen Wechselbetrieb mit Blei-Säurebatterien ermöglicht.

Diese Aufgabe wird durch eine Wechseleinheit mit den Merkmalen des Patentanspruchs 1 und ein System mit den Merkmalen des unabhängigen

Patentanspruchs 12 gelöst. Vorteilhafte Weiterbildungen der Erfindung sind in den Unteransprüchen angegeben.

Die Aufgabe wird erfindungsgemäß dadurch gelöst, dass bei einer Wechseleinheit aus einer Energieversorgungseinheit einer elektrisch angetriebenen mobilen Arbeitsmaschine, insbesondere eines Gegengewichtsgabelstaplers, und einem Traggestell für die Energieversorgungseinheit, wobei auf dem Traggestell die Energieversorgungseinheit angeordnet werden kann und beide zusammen in ein Batterieaufnahmefach der mobilen Arbeitsmaschine eingesetzt werden können sowie das Traggestell Aufnahmeöffnungen für eine Lastaufnahmevorrichtung eines Flurförderzeugs, insbesondere Aufnahmeöffnungen für Gabelzinken einer Lastgabel, aufweist, um die Wechseleinheit mit dem Flurförderzeug transportieren und in das Batterieaufnahmefach einsetzen zu können, das Gewicht des Traggestells so bemessen ist, dass die Wechseleinheit im Wesentlichen dasselbe Gesamtgewicht aufweist wie eine Blei-Säuretraktionsbatterie gleicher äußerer Abmessungen.

Dadurch kann aus einer Energieversorgungseinheit zusammen mit dem Traggestell eine Wechseleinheit gebildet werden, die sich in eine mobile Arbeitsmaschine eingesetzt genauso verhält in Bezug auf Gewicht und Schwerpunktlage, wie eine herkömmliche Blei-Säuretraktionsbatterie. Vorteilhaft können dann beispielsweise Flurförderzeuge als mobile Arbeitsmaschinen mit den gleichen Abmessungen und Tragfähigkeiten genutzt werden, wie bisher. Es können bei der Planung der benötigten Flurförderzeuge dieselben Flurförderzeuge wie bisher mit denselben Leistungsdaten eingesetzt werden in Bezug auf Hubleistung oder Traktionsleistung. Es ist nicht erforderlich, zusätzliche Gewichtselemente an den Flurförderzeugen zu montieren, um eine Veränderung der Schwerpunktlage bei einem Austausch einer Blei-Säuretraktionsbatterie gegen eine Hochleistungsbatterie, beispielsweise eine Lithium-Ionenbatterie, zu korrigieren. Solche zusätzlichen Maßnahmen können vorteilhaft entfallen. Durch die Gestaltung des Traggestells mit Aufnahmeöffnungen für eine Lastaufnahmevorrichtung, insbesondere für die Gabelzinken eines weiteren Flurförderzeugs in Form eines Gabelstaplers, ergibt sich eine einfache Möglichkeit, die Wechseleinheit in das Batteriefach einzusetzen bzw. aus dem Batteriefach zu entnehmen. Durch ein Zusatzelement in Form des Traggestells wird auf kostengünstige Art und Weise ein Wechselbetrieb zwischen herkömmlichen Blei-Säurebatterien und modernen Hochleistungsbatterien möglich, ohne dass kostenintensive Änderungen an der mobilen Arbeitsmaschine erforderlich sind. Schließlich ergibt sich auch eine schnelle Anpassungsmöglichkeit an unterschiedliche Einsatzbedingungen, wenn beispielsweise abhängig von vorhandenen Batterieladevorrichtungen und Betankungsmöglichkeiten bzw. der erforderlichen Einsatzdauer, eine geeignete Energieversorgungseinheit gewählt wird. Dies ist insbesondere bei mobilen Arbeitsmaschinen in Form von Flurförderzeugen mit wechselnden Einsatzbedingungen vorteilhaft, wie beispielsweise bei Mietgeräten, die sehr häufig sich solchen unterschiedlichen Einsatzbedingungen gegenübersehen. Bei einer Mietflotte wird mit einer geringen Anzahl an Basisfahrzeugen eine hohe Flexibilität des Einsatzes möglich, wenn ein Basisfahrzeug beispielsweise sowohl mit einer Brennstoffzellen-, einer Diesel-, Benzin-oder Treibgasenergieversorgungseinheit ausgestattet werden kann. Weiterhin können auch Traktionsbatterien mit unterschiedlicher Kapazität verwendet werden.

Vorteilhaft sind die Aufnahmeöffnungen aus Hohlprofilen gebildet, insbesondere Rechteckhohlprofilen.

Die Aufnahmeöffnungen können aus Ausnehmungen an der Unterseite des Traggestells bestehen.

In einer günstigen Weiterbildung ist das Traggestell aus Vollmaterial gebildet, insbesondere aus Metallguss.

Dies ermöglicht eine sehr stabile Ausführungsform, die zugleich ein großes Zusatzgewicht aufbringen kann.

Das Traggestell kann aus Kunststoff bestehen, in dem Metallelemente, insbesondere aus Blei, eingeschlossen sind.

Vorteilhaft können an dem Traggestell Befestigungselemente zum Halten der Energieversorgungseinheit vorhanden sein, insbesondere seitlich über eine Oberkante des Traggestells überstehende Laschen.

Durch solche Laschen wird eine Energieversorgungseinheit, die auf dem Traggestell aufsteht, gegen seitliches Verrutschen gesichert.

Die Energieversorgungseinheit kann eine Hochleistungsbatterie sein.

Vor allem können auch Batterien mit unterschiedlicher Kapazität eingesetzt werden, wenn jeweils das Traggestell in seinen zusätzlichen, ausgleichenden Gewicht angepasst ist. Dies ermöglicht die kostengünstiger Verwendung von Hochleistungsbatterien bzw. eventuell sogar Blei-Säurebatterien mit niedrigerer Kapazität und entsprechend geringeren Kosten, wenn eine hohe Kapazität nicht erforderlich ist. Dennoch weist ein Flurförderzeug als Ausführungsbeispiel einer mobilen Arbeitsmaschine dann alle Leistungswerte in Bezug auf die Hebefähigkeit und Stabilität auf.

Die Hochleistungsbatterie kann eine Lithium-Ionenbatterie sein.

Lithium-Ionenbatterien stellen die unter Kostengesichtspunkten sowie Lieferbarkeit am besten zur Verfügung stehenden Hochleistungsbatterien dar, die in Bezug auf die Energiedichte über dem Volumen wie auch dem Gewicht die optimale Leistung erbringen. Es ist daher besonders vorteilhaft, eine Lithium-Ionenbatterie durch die Wechseleinheit in Bezug auf Abmessungen und Gewicht austauschbar mit einer Blei-Säurebatterie als Traktionsbatterie zu gestalten.

Vorteilhaft weist die Energieversorgungseinheit Brennstoffzellen auf.

Die Energieversorgungseinheit kann als Hybridbaugruppe eine Hochleistungsbatterie und einen Verbrennungsmotor aufweisen.

Vorteilhaft kann eine Energieversorgungseinheit mit unterschiedlichen Traggestellen mehrere Typen von Blei-Säuretraktionsbatterien ersetzen.

Eine Energieversorgungseinheit kann für einen bestimmten Einsatzzweck eine ausreichende Kapazität aufweisen, obwohl die gewichtsmäßig oder volumenmäßig durch das Batteriefach vorgegebene Kapazität nicht genutzt wird. In einem solchen Fall können durch eine entsprechende Anpassung durch unterschiedliche Traggestelle dennoch die möglichen Leistungswerte eines Flurförderzeugs in Bezug auf Hebefähigkeit und/oder Traktionsfähigkeit ausgenutzt werden.

Die Aufgabe wird auch gelöst durch ein System aus mindestens einer mobilen Arbeitsmaschine, insbesondere einem Gegengewichtsgabelstapler, mindestens einer Blei-Säuretraktionsbatterie und mindestens einer Wechseleinheit wie sie zuvor beschrieben wurde.

Es ist eine Nutzung von beispielsweise Hochleistungsbatterien als Energieversorgungseinheit möglich, ohne dass eine neue mobile Arbeitsmaschine bzw. ein Flurförderzeug wie etwa ein Gegengewichtsgabelstapler entwickelt werden muss in Bezug auf Rahmen, Tragfähigkeit und Antrieb.

Es ist auch eine Integration des Traggestells in eine Energieversorgungseinheit denkbar.

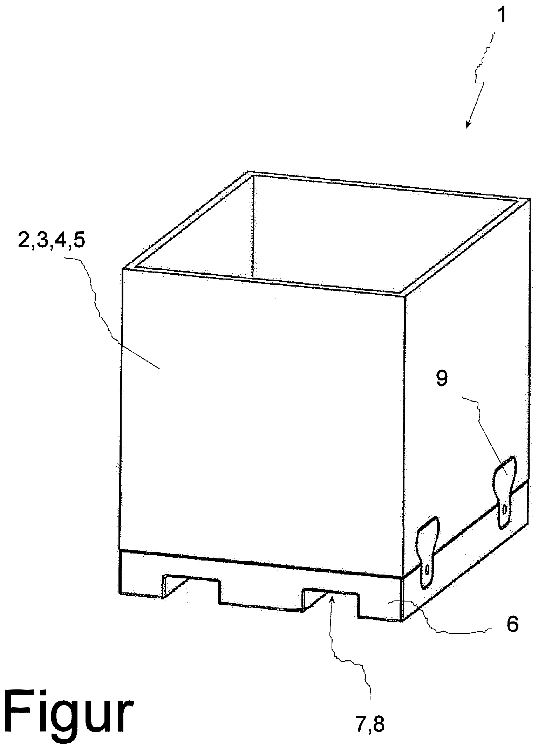

Weitere Vorteile und Einzelheiten der Erfindung werden anhand des in der schematischen Figur dargestellten Ausführungsbeispiels näher erläutert. Hierbei zeigt die Figur eine erfindungsgemäße Wechseleinheit 1 in Perspektivenansicht, die eine Hochleistungsbatterie 2 als Energieversorgungseinheit 3 umfasst. Ein Batterietrog 4 als Gehäuse 5 umschließt die hier nicht näher dargestellten Komponenten der Hochleistungsbatterie 2. Die Energieversorgungseinheit 3 steht auf einem Traggestell 6 auf, dass Aufnahmeöffnungen 7 für Gabelzinken eines weiteren Flurförderzeugs zum Transport der Wechseleinheit 1 aufweist.

Die Aufnahmeöffnungen 7 sind als Ausnehmungen 8 an der Unterseite des Traggestells ausgeführt. Zum Halten der Energieversorgungseinheit 3 sind über eine Oberkante des Traggestells 6 hinausstehende Laschen 9 an den Seiten angeordnet, die ein Verrutschen der Energieversorgungseinheit 3 verhindern.

Vorteilhaft kann die Wechseleinheit 1 als Ganzes in ein Batteriefach einer mobilen Arbeitsmaschine, insbesondere eines Gegengewichtsgabelstaplers eingesetzt werden, und verhält sich in Bezug auf Gewicht und Schwerpunktverteilung genauso, wie eine Blei-Säuretraktionsbatterie gleicher Abmessungen. Dadurch ist vorteilhaft ein wechselweiser Betrieb möglich, ohne dass die Leistungsdaten des Gegengewichtsgabelstaplers sich nachteilig verändern.

## Patentansprüche

1. Wechseleinheit aus einer Energieversorgungseinheit (3) einer elektrisch angetriebenen mobilen Arbeitsmaschine, insbesondere eines Gegengewichtsgabelstaplers, und einem Traggestell (6) für die Energieversorgungseinheit (3), wobei auf dem Traggestell (6) die Energieversorgungseinheit (3) angeordnet ist und beide zusammen in ein Batterieaufnahmefach der mobilen Arbeitsmaschine eingesetzt werden können sowie das Traggestell (6) Aufnahmeöffnungen (7) für eine Lastaufnahmevorrichtung eines Flurförderzeugs, insbesondere Aufnahmeöffnungen(7) für Gabelzinken einer Lastgabel, aufweist, um die Wechseleinheit (1) mit dem Flurförderzeug transportieren und in das Batterieaufnahmefach einsetzen zu können,
**dadurch gekennzeichnet,**
**dass** das Gewicht des Traggestells (6) so bemessen ist, dass die Wechseleinheit (1) im Wesentlichen dasselbe Gesamtgewicht aufweist wie eine Blei-Säuretraktionsbatterie gleicher äußerer Abmessungen.

2. Wechseleinheit I nach Anspruch 1,
**dadurch gekennzeichnet,**
**dass** die Aufnahmeöffnungen (7) des Traggestells (6) aus Hohlprofilen gebildet sind, insbesondere Rechteckhohlprofilen.

3. Wechseleinheit nach Anspruch 1 oder 2,
**dadurch gekennzeichnet,**
**dass** die Aufnahmeöffnungen (7) aus Ausnehmungen (8) an der Unterseite des Traggestells bestehen.

4. Wechseleinheit nach einem der Ansprüche 1 bis 3,
**dadurch gekennzeichnet,**
**dass** das Traggestell (6) aus Vollmaterial gebildet ist, insbesondere aus Metallguss.

5. Wechseleinheit nach einem der Ansprüche 1 bis 4,
**dadurch gekennzeichnet,**
**dass** das Traggestell (6) aus Kunststoff besteht, in dem Metallelemente, insbesondere aus Blei, eingeschlossen sind.

6. Wechseleinheit nach einem der Ansprüche 1 bis 5,
**dadurch gekennzeichnet,**
**dass** an dem Traggestell (6) Befestigungselemente zum Halten der Energieversorgungseinheit vorhanden sind, insbesondere seitlich über eine Oberkante des Traggestells überstehende Laschen (9).

7. Wechseleinheit nach einem der Ansprüche 1 bis 6,
**dadurch gekennzeichnet,**
**dass** die Energieversorgungseinheit (3) eine Hochleistungsbatterie (2) ist.

8. Wechseleinheit nach Anspruch 7,
**dadurch gekennzeichnet,**
**dass** die Hochleistungsbatterie (2) eine Lithium-Ionenbatterie ist.

9. Wechseleinheit nach einem der Ansprüche 1 bis 8,
**dadurch gekennzeichnet,**
**dass** die Energieversorgungseinheit (3) Brennstoffzellen aufweist.

10. Wechseleinheit nach einem der Ansprüche 1 bis 9,
**dadurch gekennzeichnet,**
**dass** die Energieversorgungseinheit (3) als Hybridbaugruppe eine Hochleistungsbatterie und einen Verbrennungsmotor aufweist.

11. Wechseleinheit nach einem der Ansprüche 1 bis 9,
**dadurch gekennzeichnet,**
**dass** eine Energieversorgungseinheit (3) mit unterschiedlichen Traggestellen (6) mehrere Typen von Blei-Säuretraktionsbatterien ersetzt.

12. System aus mindestens einer mobilen Arbeitsmaschine, insbesondere einem Gegengewichtsgabelstapler, mindestens einer Blei-Säuretraktionsbatterie und mindestens einer Wechseleinheit (1) nach einem der vorhergehenden Ansprüche.

## Claims

1. Interchangeable unit composed of an energy supply unit (3) of an electrically driven mobile working machine, in particular a counterbalance fork-lift truck, and a supporting frame (6) for the energy supply unit (3), wherein the energy supply unit (3) is arranged on the supporting frame (6), and both can be inserted together into a battery receptacle compartment of the mobile working machine, and the supporting frame (6) has receptacle openings (7) for a load-holding device of an industrial truck, in particular receptacle openings (7) for fork prongs of a loading fork, in order to be able to transport the interchangeable unit (1) with the industrial truck and insert it into the battery receptacle compartment,
**characterized**
**in that** the weight of the supporting frame (6) is dimensioned such that the interchangeable unit (1) has essentially the same overall weight as a lead-acid traction battery with the same external dimensions.

2. Interchangeable unit according to Claim 1,
**characterized**
**in that** the receptacle openings (7) of a supporting frame (6) are formed from hollow profiles, in particular rectangular hollow profiles.

3. Interchangeable unit according to Claim 1 or 2,
**characterized**
**in that** the receptacle openings (7) are composed of recesses (8) on the underside of the supporting frame.

4. Interchangeable unit according to one of Claims 1 to 3,
**characterized**
**in that** the supporting frame (6) is formed from solid material, in particular from cast metal.

5. Interchangeable unit according to one of Claims 1 to 4,
**characterized**
**in that** the supporting frame (6) is composed of plastic in which metal elements, in particular made of lead, are enclosed.

6. Interchangeable unit according to one of Claims 1 to 5,
**characterized**
**in that** attachment elements for securing the energy supply unit, in particular clips (9) which protrude laterally over an upper edge of the supporting frame, are present on the supporting frame (6).

7. Interchangeable unit according to one of Claims 1 to 6,
**characterized**
**in that** the energy supply unit (3) is a high power battery (2).

8. Interchangeable unit according to Claim 7,
**characterized**
**in that** the high power battery (2) is a lithium ion battery.

9. Interchangeable unit according to one of Claims 1 to 8,
**characterized**
**in that** the energy supply unit (3) has fuel cells.

10. Interchangeable unit according to one of Claims 1 to 9,
**characterized**
**in that** the energy supply unit (3) has, as hybrid assembly, a high power battery and an internal combustion engine.

11. Interchangeable unit according to one of Claims 1 to 9,
**characterized**
**in that** an energy supply unit (3) with different supporting frames (6) replaces a plurality of types of lead-acid traction batteries.

12. System comprising at least one mobile working machine, in particular a counterbalance fork-lift truck, at least one lead-acid traction battery and at least one interchangeable unit (1) according to one of the preceding claims.

## Revendications

1. Unité de remplacement constituée d'une unité d'alimentation en énergie (3) d'une machine de travail mobile à entraînement électrique, notamment d'un chariot élévateur à fourche à contrepoids, et d'un cadre porteur (6) destiné à l'unité d'alimentation en énergie (3), dans lequel l'unité d'alimentation en énergie (3) est disposée sur le cadre porteur (6) et ceux-ci peuvent tous deux être placés ensemble dans un logement de batterie de la machine de travail mobile, et le cadre porteur (6) présente des ouvertures de réception (7) destinées à un dispositif de réception de charge d'un chariot de manutention, notamment des ouvertures de réception (7) destinées à des dents de fourche d'une fourche de levage, afin de transporter l'unité de remplacement (1) avec le chariot de manutention et de pouvoir la mettre en place dans le logement de batterie,
**caractérisée en ce que** le poids du cadre porteur (6) est fixé de manière à ce que l'unité de remplacement (1) présente sensiblement le même poids total qu'une batterie de traction au plomb acide ayant les mêmes dimensions extérieures.

2. Unité de remplacement selon la revendication 1,
**caractérisée en ce que** les ouvertures de réception (7) du cadre porteur (6) sont formées de profilés creux, notamment de profilés creux rectangulaires.

3. Unité de remplacement selon la revendication 1 ou 2,
**caractérisée en ce que** les ouvertures de réception (7) sont constituées d'évidements (8) sur la face inférieure du cadre porteur.

4. Unité de remplacement selon l'une quelconque des revendications 1 à 3,
**caractérisée en ce que** le cadre porteur (6) est formé d'un matériau plein, notamment de métal coulé.

5. Unité de remplacement selon l'une quelconque des revendications 1 à 4,
**caractérisée en ce que** le cadre porteur (6) est constitué de matière plastique dans laquelle sont inclus des éléments métalliques, notamment en plomb.

6. Unité de remplacement selon l'une quelconque des revendications 1 à 5,
**caractérisée en ce que** des éléments de fixation destinés à maintenir l'unité d'alimentation en énergie sont présents sur le cadre porteur (6), notamment des attaches (9) dépassant latéralement au-dessus d'un bord supérieur du cadre porteur.

7. Unité de remplacement selon l'une quelconque des revendications 1 à 6,
**caractérisée en ce que** l'unité d'alimentation en énergie (3) est une batterie de forte puissance (2).

8. Unité de remplacement selon la revendication 7,
**caractérisée en ce que** la batterie de forte puissance (2) est une batterie au lithium ion.

9. Unité de remplacement selon l'une quelconque des revendications 1 à 8,
**caractérisée en ce que** l'unité d'alimentation en énergie (3) comporte des piles à combustible.

10. Unité de remplacement selon l'une quelconque des revendications 1 à 9,
**caractérisée en ce que** l'unité d'alimentation en énergie (3) comporte une batterie de forte puissance et un moteur à combustion interne en tant qu'ensemble hybride.

11. Unité de remplacement selon l'une quelconque des revendications 1 à 9,
**caractérisée en ce qu'**une unité d'alimentation en énergie (3) munie de différents cadres de support (6) remplace plusieurs types de batteries de traction au plomb acide.

12. Système constitué d'au moins une machine de travail mobile, notamment d'un chariot élévateur à fourche à contrepoids, d'au moins une batterie de traction au plomb acide et d'au moins une unité de remplacement (1) selon l'une quelconque des revendications précédentes.
